# EUROPEAN PATENT APPLICATION

(11) **EP 1 422 120 A1**
(43) Date of publication of application: **26.05.2004**
(21) Application number: 02025097.3
(22) Date of filing: 13.11.2002
(51) Int. Cl.: B62B 1/26, B62B 1/12

(54) **Device for holding a bag and/or a bucket**

(71) Applicant: CURVER B.V., NL-5050 AA Goirle (NL)
(72) Inventor: Augustijn, Diederik, 2724 AW Zoetermeer (NL); Childs, Bradley, 5211 PM's Hertogenbosch (NL); Brink, Jeroen, 6071 SH Swalmen (NL)
(74) Representative: Weber-Bruls, Dorothée, Dr.

(57) **Abstract**

The invention relates to a device for holding a bag and/or a bucket, in particular a refuse bag holder which comprises a tilted upper part, in particular a tilted opening and/or at least one holding means, and also to an assembly of a device for holding a bag and/or a bucket.

## Description

The present invention relates to a device for holding a bag and/or a bucket, in particular to a refuse bag holder, comprising at least one holding means and/or at least one opening, wherein the holding means and/or the opening is/are adapted to hold at least one refuse bag and/or at least one bucket, in particular at or adjacent to its rim portion. The present invention further relates to an assembly for a device for holding a bag and/or a bucket.

Refuse bags are commonly used not only in household bins, but also in housekeeping trolleys or janitor carts. As refuse bags are usually made from plastics and are flimsy and pliable, various efforts have been made to facilitate the collecting of garbage by use of such bags. In particular, various bag holder systems have been proposed to ensure that the bag stays open during use and that it will not be torn apart by the weight of the garbage.

In US 4,222,580 a holder assembly for refuse bags is disclosed which comprises a ground engaging transport means attached to a dish-shaped base member, and a frusto-conically shaped refuse bag support means being sized and shaped such that a refuse bag is removably received therein and wherein the closed end of the refuse bag is supported by the dish-shaped member. When the refuse bag is to be replaced, the frusto-conically shaped refuse bag support means is unlocked from the base member and lifted over the refuse bag. Thus, there is no need to pull the filled refuse bag out of the upper opening of the support means thereby avoiding the risk to rip open the bag. The holder assembly of US 4,222,580 can also comprise ground engaging wheel members and also a handle, which is preferably attached to the base member. However, the use of a refuse bag holder assembly as disclosed in US 4,222,580 is still rather cumbersome, as for example the support means has to be hoisted over the filled refuse bag. Also, care has to be taken that the refuse is properly placed within the horizontally aligned opening of the frusto-conically shaped support means.

US 6,003,820 discloses a plastic bag holding assembly for holding a plastic bag in an open position which comprises a debris directing member in the form of a debris channel, and a C-shaped member which comprises two resilient rib members connected to each other by a cross member. The debris directing member provides for a flattened portion of a plastic bag opening which can be brought in contact with a floor or ground surface thereby allowing a single user to sweep debris into the opening of the plastic bag. With the C-shaped member the opening of the bag maintains its shape irrespective of whether being placed in upright position or directly on the ground. However, the plastic bag holder according to US 6,003,820 only is adapted to be used for occasional garbage pick up, as it is, for example, rather laborious to carry a filled bag just by use of a C-shaped resilient bag holding member over long distances and/or a longer period of time.

A lightweight and inexpensive portable holder for a refuse bag is described in US 5,738,315. The holder encloses a simple perimeter structure formed from a C-shaped rod and a tube. In one embodiment the support structure comprises sled runners which facilitate the users dragging the holder along the ground during refuse collection. The refuse bag holder can also be provided with a support structure in the form of a two-legged stand so that refuse can be swept into the bag while placed on the ground, again such bag holder systems are only suited to be used in situations where bag holders which are provided with wheels for moving the holder and the bag are not usable.

It is therefore an object of the present invention to overcome the drawbacks of the refuse bag holder systems of the state of the art, in particular to provide a refuse bag holder which allows garbage to be more easily and more reliably collected and which enables the user to use and transport the refuse bag holder in a convenient and ergonomic fashion.

This object has been achieved by a device for holding a bag and/or a bucket wherein the upper part, in particular the opening and/or holding means, comprises an upper portion and, in particular oppositely located, a lower portion, in particular adapted to form a tilted upper part, in particular in the form of a tilted opening, holding means and/or rim portion.

In one preferred embodiment the device for holding a bag and/or a bucket further comprises at least one support means, in particular in the form of at least one stand, which is, in particular reversibly, attachable or connected to, at least partially, in particular in a detachably lockable fashion, or is, at least partially, an integral part of the upper part, in particular the opening and/or the holding means, and which in particular is, in particular reversibly, attachable to a bottom part.

Provisions may be made that the device according to the invention further comprises a bottom part which is connected to, in particular in a detachably lockable fashion, the support means.

In one embodiment of the present invention the upper part of the device for holding a bag and/or a bucket, in the following also briefly called bag holder device, can have a flat design within which the opening or opening frame and/or bag holding means are already incorporated. The upper part, the opening and/or the holding means can be of various shapes and sizes, e.g. have the form of a square, a circle or of a rectangular shape. The opening or opening frame and the holding means, especially the bag holding means, in particular form a two-frame system inbetween which the circumference of a bag can be clamped or squeezed thereby allowing for a very reliable and convenient fixation of a refuse bag. As the upper part comprises an upper portion and a lower portion to which the bag or bucket is fixed, some segments of the rim of the fixed bag are located at a higher position which makes it easier to properly collect garbage. In general, a portion of the inner surface of the peripheral part of the bag is facing the user when standing in front of the bag holder device. The support means is preferably placed only at two opposite sides of the bag holder thereby leaving some areas of the bag or the bucket uncovered. Especially when two stands or risers are used as support means these are preferably located at the lateral edges of the upper part of the bag holder. Preferably, these stands are at least connected to those edges of the upper part which connect the upper and lower portions of that upper part.

In an another embodiment of the present invention the bottom part represents a platform. The platform keeps the bag holder device according to the invention from being easily overturned when placed on a ground surface, for example when abutted or by the weight of a filled bag.

Further, the invention proposes that at least one bag and/or at least one bucket is/are lined within said device.

Preferably, the rim portion of the bag or the bucket, in particular the circumference of the fixated rim, is releasably fixated, and is tilted, in particular forms a tilted plane.

Provisions may be made that the angle of the tilted plane is adjustable.

Also, according to the invention the degree the individual rim portions deviate in height is adjustable.

Further provisions may be made that the opening and/or the holding means form a tilted frame, in particular having a rectangular, square, circular or oval-like circumference.

In one embodiment of the present invention the opening and/or the holding means has/have an upper portion and a lower portion, in particular essentially straight upper and/or lower portions, both of which are essentially horizontally aligned, and/or side portions between the upper and lower portions which are tilted, and which are in particular aligned in parallel.

In another preferred embodiment of the present invention the stand is bent, in particular in its intermediate segment, and/or comprises at least one, in particular adjustable, lockable hinge in the upper segment, intermediate segment and/or bottom segment.

Provisions may be made that the stand comprises at least one upper segment, in particular an essentially straight upper segment, at least one intermediate segment, at least one of which has a bent or angled shape, and at least one bottom segment, which is attachable, in particular in a detachably lockable fashion, to a platform, wherein the upper segment and the intermediate segment and/or the intermediate segment and the bottom segment are in particular detachably lockable.

Additionally, in one embodiment of the invention at least one upper segment and/or at least one intermediate segment and/or at least one bottom segment the stand is/are extendable.

In one preferred embodiment of the present invention the upper part, the opening, the holding means and/or the circumferential rim of a bag or bucket lined in said device is/are tilted with an angle in the range from about 10 to about 45°. More preferred, the tilted upper part, the opening frame, the holding means and/or the rim portion, in particular the circumference of the fixated rim, has/have an angle in the range from 15° to about 35°, and most preferred from 18 to 30°. The angle of the tilted upper part or tilted plane can for example be adjusted by means of hinges which connect the support means with the upper part.

Further, it is preferred that the bottom part, in particular the platform, comprises at least one transporting means, in particular at least one wheel or at least one pair of wheels, in particular located at or adjacent to an edge of the bottom part.

As a suitable transporting means apart from one or more wheels also one or more rolls can be employed. For example, four wheels can be placed at the comer portions of a rectangular-shaped platform. In particular a roll or at least two spaced apart wheels are used which are preferably located at the same side of the bag holder where the handle is placed.

Provisions may be made that the transporting means is aligned to or at the same side of that portion of the upper part, in particular the opening, holding means and/or rim portion, which essentially surmounts all other portions of the upper part.

Further provisions may be made that the transporting means comprises a cover, in particular an upper cover.

In one aspect of the present invention the bottom part, in particular the platform, comprises at least one, in particular lockable, compartment, in particular opposite the transporting means.

In this respect it is also preferred that the compartment has the form of a lockable cylinder, in particular having been moulded in one part with the platform.

In one embodiment of the present invention the bottom part, in particular the platform, further comprises at least one fixing means, in particular adapted to hold shafts or broom sticks or the like.

Also, provisions may be made that the upper part comprises at least one hole, hook and/or holder, in particular for mop handles, broom handles, broom sticks, paper towels or the like.

In another aspect of the present invention the device for holding a bag and/or a bucket further comprises a lid, which in particular is hinged to the upper part.

Preferably the lid is provided with a grip or a handle. Especially, when the lid is tilted as is the upper part the grip or handle is preferably located at its lower edge.

In a further aspect of the present invention the bag holding means comprises at least a two-frame system, or the bag holding means and the opening form a two-frame system, which is adapted to reversibly fasten at least one bag, the frames or the bag holding means and the opening being detachably lockable to each other.

Provisions may be made that the frames of the two-frame system or the bag holding means and the opening are connectable via at least one fastening, locking and/or adjusting device, in particular a hinge, located in particular at the lower portion or the upper portion of the upper part, in particular of the opening, holding means and/or rim.

In one embodiment of the invention the hinge is located spaced apart from the opening, holding means and/or rim.

In another aspect of the present invention an assembly for a device for holding a bag and/or a bucket is proposed comprising an upper part which comprises at least one opening and/or at least one holding means, wherein the holding means and/or the opening is/are adapted to hold at least one refuse bag and/or at least one bucket, in particular at or adjacent to its rim portion, wherein the upper part, in particular the opening and/or holding means, comprises an upper portion and, in particular oppositely located, a lower portion, in particular adapted to form a tilted upper part, opening and/or holding means; at least one support means, in particular in the form of at least one stand, which is attachable in a detachably lockable fashion to the upper part, and which comprises at least one, in particular two, essentially straight segment and/or at least one, in particular intermediate, essentially bent and/or angled segment; and/or a bottom part, in particular a platform, to which at least one support means is attachable in a detachably lockable fashion.

Provisions may be made that the support means comprise, in particular two oppositely arranged, stands which comprise at least one essentially straight upper segment and at least one essentially straight bottom segment or at least one straight intermediate segment, which in particular are attachable in a detachable lockable fashion.

Further provisions may be made that the support means is adapted to to be, in particular reversibly, changeable from a straight or vertical orientation, in particular by use at least one essentially straight segment, to a bent or angled orientation, in particular by exchange of at least one essentially bent or angled segment.

The bag holder device of the present invention as well as the assembly for such a bag holder device can be used as or for housekeeping trolley, a janitor cart or a refuse bin.

The bag holder device according to the invention as well as its individual components can be made from a variety of different materials such as metal or plastics. A device or its components which is/are made from injection moulded plastic are particularly preferred. As a consequence a lightweight and stable bag holder device can be obtained.

Thus, it has been surprisingly found that with bag holder systems which comprise or allow for a tilted opening of a refuse bag so that a part of the inner surface of the bag is facing the user, refuse can be collected much more easily and much more reliably. It is another surprising perception of the present invention that by providing a transportable refuse bag holder with a tilted opening optimum ergonomic requirements can be met, not only when the bag holder device is at rest, but also when moved. Thus, a convenient height of garbage to be collected or the lid to be opened is combined with a convenient height of a handle for moving the bag holder device. As not only the angle of the upper part but also the height of the device is adjustable, each individual user can arrange for the best settings. Also, it has surprisingly been found that bag holder devices according to the present invention can be easily transformed into embodiments having a horizontal opening. Further, the bag holder device can be easily assembled by use of only a few components, still furnishing the possibility to arrive at different designs, thereby being adaptable to the needs of the individual user.

The invention, together with further objects and advantages, may best understood with reference to the following description taken together with the accompanying drawings, in which
- Fig. 1: is a perspective view of an embodiment of a bag holding device according to the invention;
- Fig. 2: is another perspective view of the bag holding device according to the present invention;
- Fig. 3a) and b): are schematic side views of a bag holding device according to the present invention;
- Fig. 4a): is a schematic side view of another embodiment of a bag holding device according to the present invention;
- Fig. 4b): is a schematic perspective view of a bag holding device as of Fig. 4a);
- Fig. 5a): is a schematic side view of another embodiment of a bag holding device according to the present invention;
- Fig. 5b): is a schematic perspective view of a bag holding device as of Fig. 5a);
- Fig. 6: is a schematic perspective view of the upper part of the bag holding device according to the present invention;
- Fig. 7: is a perspective view of disassembled components of a bag holding device according to the present invention; and
- Fig. 8a) and b): are schematic views of the handle of the upper part of the bag holding device of the invention.

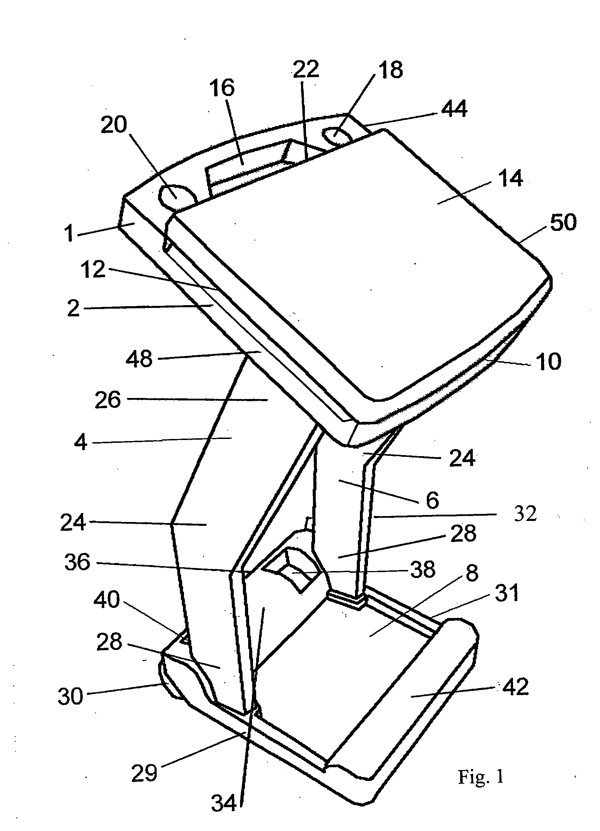

Fig. 1 illustrates a freestanding bag holder device 1 according to the invention which comprises an upper part 2, support means 4, 6 and a bottom part 8. The upper part 2 essentially comprises an opening frame 10, a bag holding means 12 and a lid 14. Further, the upper part 2 can comprise a handle 16, holes 18, 20 to take up, for example, broom sticks or the like. The upper part 2 of the bag holder device 1 is aligned in a tilted fashion. The lid 14 has hinges at its upper longitudinal edge 22. Also, the handle 16 is placed at the upper portion 44 of the upper part 2. The upper part 2 is held by two essentially parallel support means 4 and 6. The support means are located adjacent to the lateral edges or side portions 48, 50 of the upper part 2. Preferably, the support means 4, 6 are constructed in the form of stands which preferably have at least in one dimension a very narrow cross section. Both support means 4, 6 are angled in their intermediate segment 24. As the plane of the upper part 2, in particular that spanned by the opening frame 10 and/or the bag holding means 12, and the upper segment 26 of the support means 4, 6 are aligned in a rectangular fashion and as the bottom segment 28 of these support means are vertically orientated, the angle in the intermediate segment 24, dictates the degree the upper part 2 is tilted. Both support means 4 and 6 are connected to the bottom part or base 8 of the bag holder device 1. The lower segment 28 of the support means 4 and 6 preferably is located adjacent to opposing, in particular lateral, edges 29, 31 of platform 8, and also adjacent to wheels 30, 32. With such an arrangement sufficient space is left at the bottom part 8 of device 1 to take up a bag when lined in this device. Simultaneously, the upper segments 26 of support means 4, 6 serve as guiding elements for a bag preventing the bag to sway in lateral direction. Wheels 30 and 32 are covered, at least partially, by use of a cover means 34 which extends along the entire length of edge 36. Cover means 34 can be an integral part of base 8, and, if the base is made from plastics, can for example be injection-moulded in one piece with the entire base 8. Cover means 34 can be provided with fixing means 38, 40, for example to fixate broom sticks which are held by holes 18 and 20. A cylindrically shaped compartment 42 is provided opposite cover means 34 on the platform of bottom part 8. This compartment 42 can, for example, be used to store refuse bags which are usually purchased in an uncoiled fashion. Preferably, compartment 42 can be made in one piece with bottom part 8, for example by use of the injection-mould technique. For example, compartment 42 can be opened along the longitudinal edge of the bottom part 8.

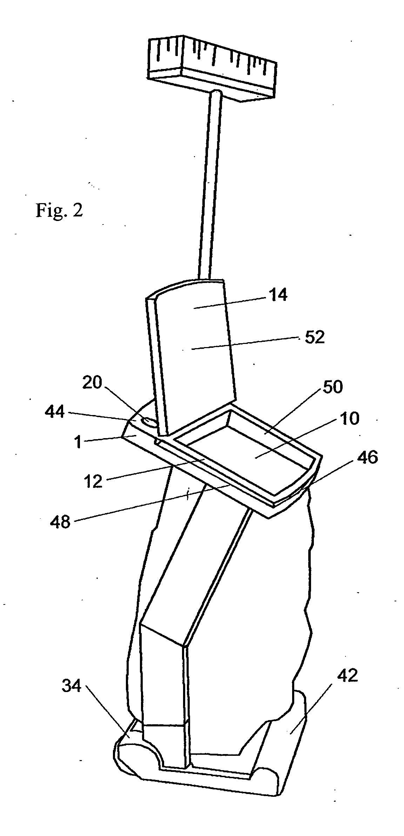

Fig. 2 depicts a bag holder device 1 according to the invention as shown in Fig. 1 when lined with a bag. Also, a broom stick is placed in one of holes 18 and 20. As the lid 14 is open, it can be seen that the circumference of the fixated rim portion of the line bag lies in a tilted plane. Thus, the opening 10, holding means 12 and rim comprises an upper portion 44 and a lower portion 46 the edges of which are aligned in parallel and also essentially horizontally, as well as side portions 48 and 50, which connect the upper and lower portions 44 and 46, respectively, and which are tilted. The opening of the inventive bag holder device 1 is accessible without any problems, and refuse can be reliably put into the refuse bag. Also, the bottom side 52 of lid 14 can for example be used to clean ashtrays when the lid 14 is in an upright position. As can also be derived from Fig. 2 cover means 34 for the wheels and also compartment 42 form barriers which aid to hold the bottom part of the filled bag in place.

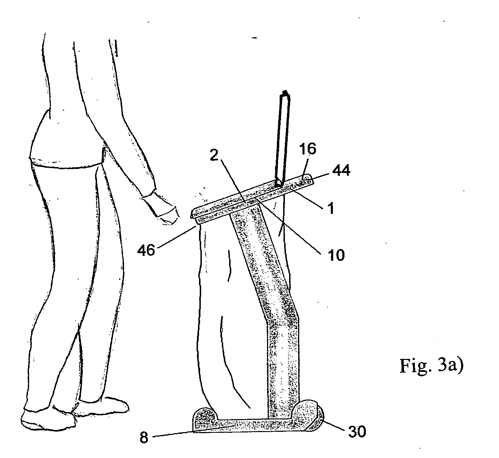

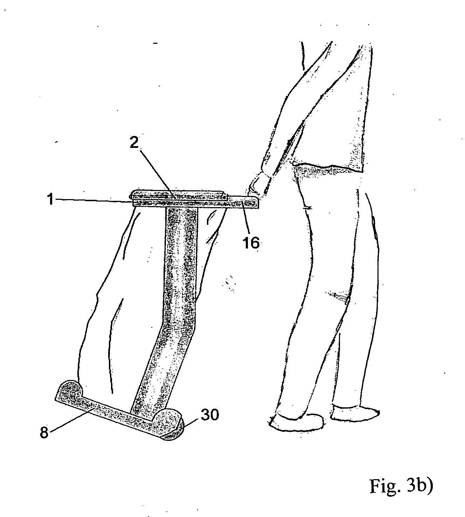

In Figs 3a and 3b the bag holder device 1 can be seen when standing on its bottom part 8 (Fig. 3a) and also when moved (Fig. 3b). As long as no force is applied to the bag holder device 1 it usually rests on its platform or bottom part 8. Wheels 30 and 32 are either located above the ground or are in plane with the bottom side of platform 8. In a position according to Fig. 3a the height of the opening 10, in particular at its lower portion 46, is as such that it is easily accessible so that garbage or refuse can be conveniently and safely placed in a bag which is lined in bag holder device 1. The bag holder device 1 according to the invention can also very conveniently be moved by just pulling the handle 16, which is at the highest position, i.e. at the upper portion 44, when the bag holder device 1 is placed on its bottom part 8, thereby furnishing an upper part 2 which is essentially horizontally aligned. From an ergonomic point of view the height of the handle is ideal to commence with a forward or backward movement of bag holder device 1. As this device is slightly tilted when moved the distance between handle 16 and the ground surface is marginally reduced. However, the height of handle 16 when moved is still greater than the height of the lower portion of the upper part 2 when the bag holder device rests on its platform. This ensures on the other hand a handle height which is very convenient for a user, and on the other hand a height of the lower portion of the upper part 2 which is easily accessible for collecting refuse.

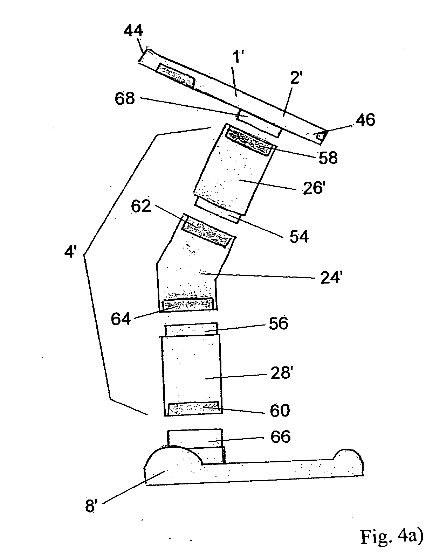

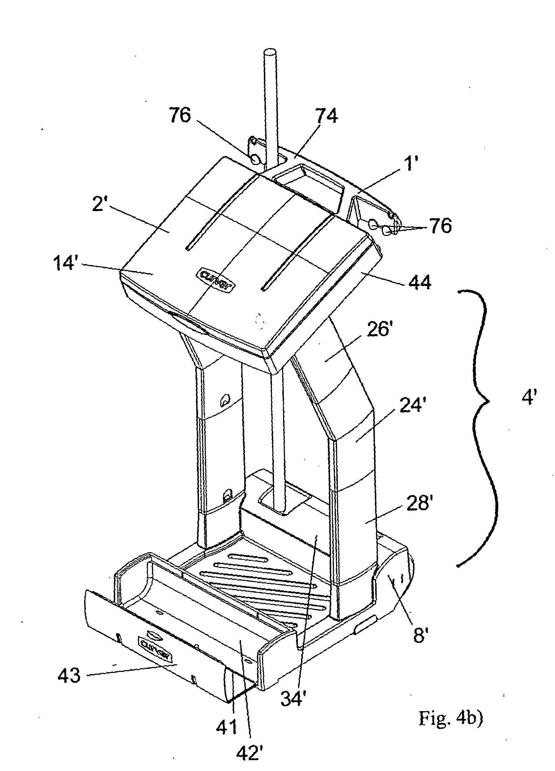

According to Fig. 4a), another embodiment of bag holder device 1' of the present invention is shown in a disassembled fashion. Bag holder device 1' comprises a bottom part 8' and an upper part 2' which belong to a modular system from which bag holder device 1' according to the invention can be assembled. The support means, from which only one stand 4' can be seen, comprises straight upper and lower segments 26', 28' and also an individual, angled intermediate segment 24'. The upper and lower segments 26', 28' each comprise a tongue and a groove element (54, 56; 58, 60). The intermediate segment 24' comprises two groove elements 62 and 64 at its respective ends, whereas the bottom part 8' as well as the upper part 2' both comprise a tongue element 66 and 68, respectively. When all tongue and groove elements are fitted together in a manner as depicted in Fig. 4a) a bag holder device 1' is obtained which functions in the same way as those bag holder devices described in Fig. 1 to 3. Of course, the length of the upper, lower and/or tilted segments 24', 26', 28' can be varied to a great extent. For example, a lower segment 28' can be replaced by another one being smaller or bigger in dimension and/or size (not shown). Also, especially if the upper and lower segments 26', 28' differ in length, they can be easily exchanged, especially if the tongue and groove elements are standardized, in order to obtain ideal conditions for the individual user. It comes without saying, that the tongue and groove elements can also be varied. In the embodiment according to Fig. 4 a groove element of the lower portion 28' is fixed to a tongue element 66 of bottom part 8'.

If for certain uses or under certain circumstances a horizontally aligned opening 10 and/or holding means 12 is preferred, the modular system of Fig. 4a) only needs to be slightly altered.

In Fig. 4b) an embodiment similar to that of Fig. 4a) is shown in a perspective view. A compartment 42' is provided with a cover 43 which is joined to the base of the compartment 42' via a film hinge 41. At the upper portion 44 of upper part 2' a'fastening means 74 is provided which serves to hold and engage broom sticks or the like, especially by use of projecting elements 76, and also smaller tools like towels.

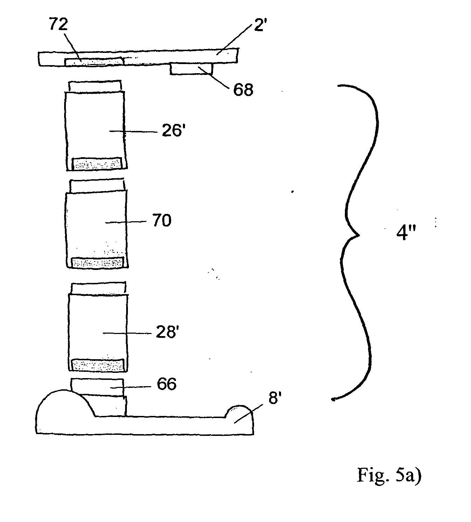

Instead of an angled intermediate portion 24' another straight portion 70 can be added to the support means 4" furnishing a straight support means 4" as shown in Fig. 5a). Instead of three portions of essentially the same length, also one or two portions being greater in length can be used to form the support means 4". In order to be able to place the bag above the bottom part 8 also when a straight support means with a horizontally aligned upper part 2' is used another fixation means can be provided, for example in the form of a groove element 69 of upper part 2'. Whereas the fixation means 68 for the bag holder device 1' having an angled intermediate segment 24' is located towards a lower portion 46 of the tilted upper part 2' a respective fixation means for the horizontally aligned upper part 2' is located in or adjacent to that portion 44 of the upper part 2' which, when used in the tilted version, is furthest apart from the ground surface. As can be derived from Figs. 4a) and 5a) the upper and lower segments 26' and 28' do not have to be exchanged when switching from a tilted to a horizontal upper part 2'. Upper segment 26' only has to be turned upside down.

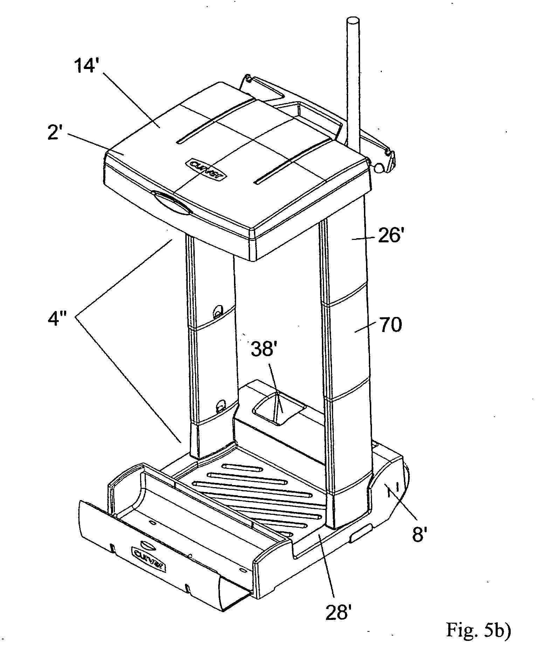

In Fig. 5b) an embodiment similar to that of Fig. 5a) is shown in a perspective view. The bag holder device of Fig. 5b) differs from the bag holder device of Fig. 4b) in that the intermediate portion 70 is straight and not bent, like portion 24'.

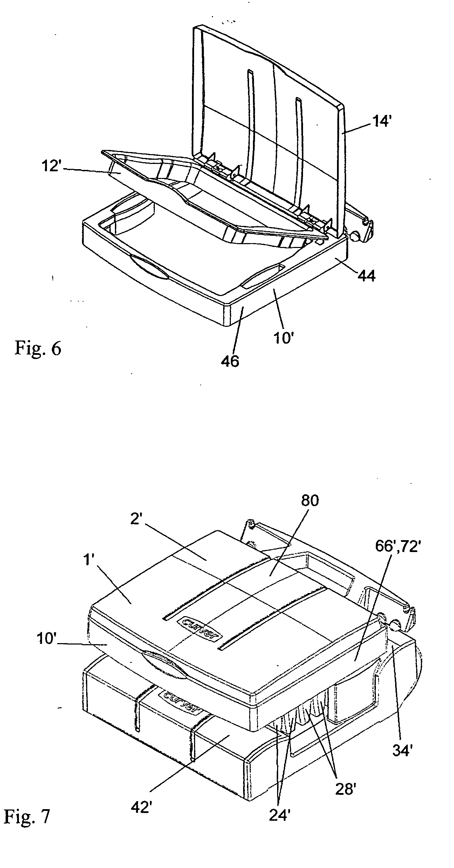

According to Fig. 6 the opening of the bag holder device 1 can comprise a circumferential rim or opening frame 10' to which a lid 14 is connected via hinges. A frame which is roughly identical in size to the circumferential rim 10' can be used as a bag holding means 12'. A bag which is placed over the circumferential rim 10' is fastened or squeezed by frame 12' when placed on top of the circumferential rim 10'.

Fig. 7 shows an assembly 80 of a bag holder device 1' according to the invention when completely disassembled. The upper and lower segments 24', 28' as well as the angled and/or straight intermediate segments 24' and 70, resp., are placed on top of the bottom part 8' between compartment 42' and cover means 34' of the wheels. These segments are furthermore held by the opening frame 10'. The upper part 2' of the bag holder device is directly fixed to the bottom part 8' by use of tongue 66' (dotted line) which fits into groove 72' thereby allowing for a secure and tight engagement of these components. Thus, the assembly for a device for holding a bag according to the invention, when disassembled, can be stored in a very space-saving and safe manner.

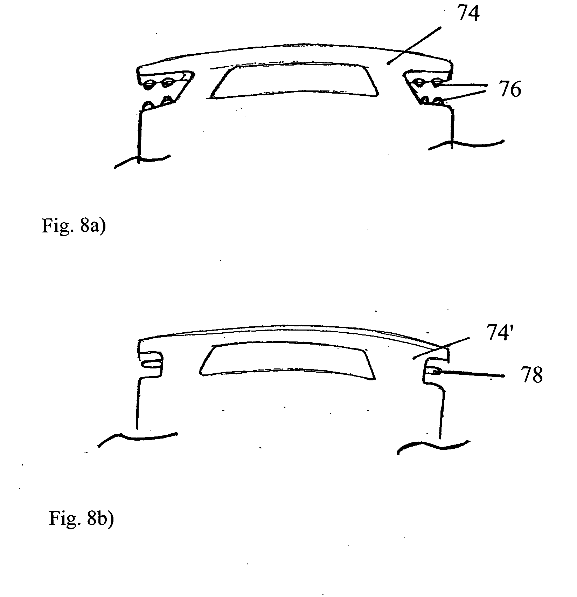

In Figs. 8a) and 8b) two different fastening means 74 and 74' are shown. In fastening means 74 of Fig. 8a) two projecting elements 76 are shown on each side which can be used to engage for example a broom stick. Fastening means 74' comprise two hooks which are suited for the attachment of smaller tools, e.g. towels.

Although modifications and changes may be suggested by those skilled in the art, it is the intention of the applicant to embody within the patent warranted hereon all changes and modifications as reasonably and probably come within the scope of this contribution to the art. The features of the present invention which are believed to be novel are set forth in detail in the independent claims. The features disclosed in the description, the figures as well as the claims could be essential alone or in every combination for the realization of the invention in its different embodiments.

### Reference List

- 1, 1': Bag holder device
- 2, 2': Upper part of bag holder device
- 4, 4', 4": Support means of bag holder device
- 6, 6', 6": Support means of bag holder device
- 8, 8': Bottom part of bag holder device
- 10, 10': Opening frame
- 12, 12': Bag holding means
- 14, 14': Lid
- 16: Handle
- 18: Hole
- 20: Hole
- 22: Upper longitudinal edge of the lid
- 24, 24': Intermediate portion of the support means
- 26, 26': Upper portion of the support means
- 28, 28': Lower portion of the support means
- 29: lateral edge of bottom part 8, 8'
- 30: Wheel
- 31: lateral edge of bottom part 8, 8'
- 32: Wheel
- 34, 34': Cover means
- 36: Edge of bottom part 8, 8'
- 38: Fixing means
- 40: Fixing means
- 41: Hinge
- 42, 42': Compartment
- 43: Cover
- 44: Upper portion or edge of upper part 2, 2'
- 46: Lower portion or edge of upper part 2, 2'
- 48: Tilted portion, lateral edge
- 50: Tilted portion, lateral edge
- 52: Bottom side of lid 14
- 54: Tongue element of upper portion 26'
- 56: Tongue element of lower portion 28'
- 58: Groove element of upper portion 26'
- 60: Groove element of lower portion 28'
- 62: Groove element of intermediate portion 24'
- 64: Groove element of intermediate portion 24'
- 66, 66': Tongue element of bottom part 8'
- 68: Tongue element of upper part 2'
- 70, 72': Straight intermediate portion
- 72: Groove element
- 74, 74': Fastening means, holder
- 76: Projecting elements
- 78: Hook
- 80: Assembly

## Claims

1. A device (1, 1') for holding a bag and/or a bucket, in particular a refuse bag holder, comprising an upper part which comprises at least one opening and/or at least one holding means wherein the opening and/or the holding means is/are adapted to hold at least one refuse bag and/or at least one bucket, in particular at or adjacent to its rim portion,
**characterized in that**
the upper part (2, 2'), in particular the opening (10, 10') and/or holding means (12, 12'), comprises an upper portion (44) and, in particular oppositely located, a lower portion (46), in particular adapted to form a tilted upper part (2, 2'), in particular in the form of a tilted opening, holding means and/or rim portion.

2. The device (1, 1') according to claim 1, further comprising at least one support means (4, 4'; 6, 6'), in particular in the form of at least one stand, which is, in particular reversibly, attachable or connected to, at least partially, in particular in a detachably lockable fashion, or is, at least partially, an integral part of the upper part (2, 2'), in particular the opening (10, 10') and/or the holding means (12, 12'), and which in particular is attachable to a bottom part (8, 8').

3. The device (1, 1') according to claim 2, further comprising
a bottom part (8, 8'), which is connected to, in particular in a detachably lockable fashion, the support means (4, 4'; 6, 6').

4. The device (1, 1') according to one of claims 2 and 3, **characterized in that**
the bottom part (8, 8') represents a platform.

5. The device (1, 1') according to one of the preceding claims, wherein
the rim portion of the bag or the bucket, in particular the circumference of the fixated rim, is releaseably fixated, and is tilted, in particular forms a tilted plane.

6. The device (1, 1') according to one of the preceding claims, wherein
the opening (10, 10') and/or the holding means (12, 12') form a tilted frame, in particular having a rectangular, square, circular or oval-like circumference.

7. The device (1, 1') according to one of the preceding claims, wherein
the stand (4, 4'; 6, 6') is bent, in particular in its intermediate segment (24, 24'), and/or comprises at least one lockable, in particular adjustable, hinge in the upper segment (26, 26'), intermediate segment (24, 24') and/or bottom segment (28, 28').

8. The device (1, 1') according to one of the preceding claims, wherein
the stand (4, 4'; 6, 6') comprises at least one upper segment (26, 26'), in particular an essentially straight upper segment, at least one intermediate segment (24, 24'), at least one of which has a bent or angled shape, and at least one bottom segment (28, 28'), which is attachable, in particular in a detachably lockable fashion, to a platform (8, 8'), wherein the upper segment (26, 26') and the intermediate segment (24, 24') and/or the intermediate segment (24, 24') and the bottom segment (28, 28') are in particular detachably lockable.

9. The device (1, 1') according to one of the preceding claims, wherein
the upper part (2, 2'), the opening (10, 10'), the holding means (12, 12') and/or the circumferential rim of a bag or a bucket lined in said device is/are tilted with an angle in the range from about 10 to about 45°.

10. The device (1, 1') according to one of the preceding claims, wherein
the bottom part (8, 8'), in particular the platform, comprises at least one transporting means (30, 32), in particular at least one wheel or at least one pair of wheels, in particular located at or adjacent to an edge (36) of the bottom part.

11. The device (1, 1') according to claim 10, wherein
the transporting means (30, 32) is aligned to or at the same side of that portion (44) of the upper part (2, 2'), in particular the opening (10, 10'), holding means (12, 12') and/or rim portion, which essentially surmounts all other portions of the upper part (2, 2').

12. The device (1, 1') according to claim 10 or 11, wherein
the transporting means (30, 32) comprises a cover (34, 34'), in particular an upper cover.

13. The device (1, 1') according to one of the preceding claims, wherein
the bottom part (8, 8'), in particular the platform, comprises at least one, in particular lockable, compartment (42, 42'), in particular opposite the transporting means (30, 32).

14. The device (1, 1') according to one of the preceding claims, wherein
the bottom part (8, 8'), in particular the platform, further comprises at least one fixing means (38, 38', 40), in particular adapted to hold shafts or broom sticks or the like.

15. The device (1, 1') according to one of the preceding claims, wherein
the upper part (2, 2') comprises at least one hole (18, 20), hook (78) and/or holder (74), in particular for mop handles, broom handles, broom sticks, paper towels or the like.

16. The device (1, 1') according to one of the preceding claims, further comprising
a lid (14, 14'), which in particular is hinged to the upper part (2, 2').

17. The device (1, 1') according to one of the preceding claims, wherein
the bag holding means (12, 12') comprises at least a two-frame system, or wherein the bag holding means (12, 12') and the opening (10, 10') form a two-frame system, which is adapted to reversibly fasten at least one bag, the frames or the bag holding means and the opening being detachably lockable to each other.

18. The device (1, 1') according to claim 17, wherein
the frames of the two-frame system or the bag holding means (12, 12') and the opening (10, 10') are connectable via at least one fastening, locking and/or adjusting device, in particular a hinge, located in particular at the lower portion (46) or the upper portion (44) of the upper part (2, 2'), in particular of the opening (10, 10'), holding means (12, 12') and/or rim.

19. An assembly (80) for a device for holding a bag and/or a bucket, in particular according to one of the preceding claims, comprising
an upper part (2') which comprises at least one opening (10') and/or one holding means (12'), wherein the holding means (12') and/or the opening (10') is/are adapted to hold at least one refuse bag and/or at least one bucket, in particular at or adjacent to its rim portion, wherein the upper part (2'), in particular the opening (10') and/or holding means (12'), comprises an upper portion (44) and, in particular oppositely located, a lower portion (46), in particular adapted to form a tilted upper part (2'), opening and/or holding means;
at least one support means (4', 4"; 6', 6"), in particular in the form of at least one stand, which is attachable in a detachably lockable fashion to the upper part (2'), and which comprises at least one, in particular two, essentially straight segment (26', 28', 70) and/or at least one, in particular intermediate, essentially bent and/or angled segment (24'); and/or a bottom part (8'), in particular a platform, to which at least one support means (4', 4"; 6', 6") is attachable in a detachably lockable fashion.

20. The assembly (80) according to claim 19, wherein
the support means (4', 4"; 6', 6") is adapted to to be, in particular reversibly, changeable from a straight or vertical orientation, in particular by use of at least one essentially straight segment (26', 28', 70), to a bent or angled orientation, in particular by exchange of at least one straight segment (26', 28', 70) by at least one essentially bent or angled segment (24').

21. Housekeeping trolley, janitor cart or refuse bin, comprising at least one device according to one of claims 1 to 18 or at least one assembly according to claim 19 or 20.
